Europäisches Patentamt

European Patent Office

Office européen des brevets

(11) Veröffentlichungsnummer: **0 260 670 B1**

(12) **EUROPÄISCHE PATENTSCHRIFT**

(45) Veröffentlichungstag der Patentschrift: **09.03.94**

(51) Int. Cl.5: **G01S 13/52**, G01S 13/22, G01S 13/24

(21) Anmeldenummer: **87113513.3**

(22) Anmeldetag: **16.09.87**

(54) **Verfahren zur Verringerung von Falschzielmeldungen in einem Pulsdopplerradar.**

(30) Priorität: **17.09.86 DE 3631585**

(43) Veröffentlichungstag der Anmeldung:
**23.03.88 Patentblatt 88/12**

(45) Bekanntmachung des Hinweises auf die
Patenterteilung:
**09.03.94 Patentblatt 94/10**

(84) Benannte Vertragsstaaten:
**DE FR GB**

(56) Entgegenhaltungen:
EP-A- 0 050 886          EP-A- 0 100 012
EP-A- 0 122 011          FR-A- 2 494 855
GB-A- 2 114 394          US-A- 4 057 800
US-A- 4 106 019

(73) Patentinhaber: **Deutsche Aerospace AG**

**D-81663 München(DE)**

(72) Erfinder: **Ludloff, Albrecht, Dipl.-Ing.**
**Ravensburger Strasse 121**
**D-7900 Ulm(DE)**
Erfinder: **Minker, Manfred, Dipl.-Ing.**
**Fünf-Bäume-Weg 209**
**D-7900 Ulm(DE)**

(74) Vertreter: **Schulze, Harald Rudolf, Dipl.-Ing.**
**Deutsche Aerospace AG,**
**Patentabteilung,**
**Sedanstrasse 10**
**D-89077 Ulm (DE)**

EP 0 260 670 B1

**Beschreibung**

Die Erfindung betrifft ein Verfahren zur Verringerung von Falschzielmeldungen in einem Pulsdopplerradar nach dem Oberbegriff des Patentanspruchs.

Bei Pulsdopplerradar-Anlagen ist es gebräuchlich, mehrere auf einanderfolgende Radarperioden zu einem Verarbeitungsintervall (CPI, Burst) zusammenzufassen und die während eines solchen Intervalls eintreffenden Echosignale kohärent zu verarbeiten. Dies ermöglicht vor allem die Bestimmung der Radialgeschwindigkeit eines Ziels. Während eines Bursts werden Sendefrequenz und Pulswiederholfrequenz (PRF) konstant gehalten.

Die über die Antenne empfangenen Signale enthalten neben den Echosignalen von echten Zielen aber auch zufällige oder, vor allem bei Radaranlagen zur Erfassung gegnerischer Ziele, absichtliche Störungen, welche die Auswertung und Zielortung erschweren oder u.U. auch unmöglich machen, indem sie eine Vielzahl falscher Ziele vortäuschen.

Zur Unterdrückung von Störsignalen sind verschiedene Maßnahmen, wie z.B. Nebenzipfelunterdrückung, jam-Detektoren, CFAR-Schaltungen usw. bekannt. Trotz dieser Maßnahmen können vor allem bei gezielten Störungen noch viele Falschzielmeldungen auf einen nachfolgenden Parameterextraktor und beispielsweise einen Zielverfolgungsrechner gelangen. Wenn die Verarbeitungskapazität nachgeschalteter Einrichtungen, wie z.B. des Zielverfolgungsrechners zur Bewältigung aller Zielmeldungen nicht mehr ausreicht, kann dies dazu führen, daß die Signale von Falschzielen weiterverarbeitet, die von echten Zielen mangels Verarbeitungskapazität aber verworfen werden.

Aus der US-A-4 106 019 ist ein Pulsdoppler-Radar bekannt, bei dem für ein sich mit hoher Geschwindigkeit bewegendem Ziel ein eindeutiger Entfernungsbereich bestimmt wird. Dazu wird zwischen benachbarten Verarbeitungsintervallen (Bursts) die Pulsfolgefrequenz (PRF) geändert. Außerdem werden die zu drei aufeinanderfolgenden Verarbeitungsintervallen gehörenden Ausgangsdaten der Dopplerfilter gespeichert, entfernungsringweise ausgewertet und daraus der eindeutige Entfernungsbereich bestimmt.

Aus der US-A-4 057 800 ist ein Multi-PRF-Dopplerradar für Flugzeuge bekannt, wobei die Pulsfolgefrequenz (PRF) nach jedem Verarbeitungsintervall geändert wird und Vorzugsweise fünf Pulsfolgefrequenzen verwendet werden. Die empfangenen (Ziel-)Echosignale werden mit Hilfe einer Doppler-Filterbank ausgewertet und die zu jeder PRF gehörenden Filterbank-Daten gespeichert. Sofern diese Daten für mindestens zwei PRFs übereinstimmen, wird auf das Vorhandensein eines echten Zieles geschlossen.

Aus der FR-A-2 494 855 ist ein Pulsdoppler-Radar zur Erkennung von Zielen in Bodenclutter bekannt. Dabei wird ein Sendesignal mit bekannter PRF erzeugt und die empfangenen Echosignale kohärent verarbeitet. Daraus entstehen Pulse mit einer willkürlichen Pulswiederholzeit. Aus den Pulsen wird mit Hilfe eines Spektralanalysators und eines Diskriminators ein in einem bestimmten Entfernungsbereich möglicherweise vorhandenes Ziel ermittelt.

Der vorliegenden Erfindung liegt die Aufgabe zugrunde, eine durch Falschzielmeldungen verursachte hohe Datenmenge wesentlich zu reduzieren, ohne Zielmeldungen von echten Zielen zu unterdrücken.

Die Erfindung ist in dem Patentanspruch beschrieben.

Mit den erfindungsgemäßen Maßnahmen ist es bei geringem zusätzlichen Aufwand und in Echtzeit möglich, einen Großteil der nach den bisher gebräuchlichen Störbefreiungsmaßnahmen noch verbleibenden Falschzielmeldungen zu eliminieren.

Besonders bevorzugt wird die gemäß einer Weiterbildung der Erfindung vorgesehene Umschaltung von Sendefrequenz und Pulsfolgefrequenz zwischen zwei Bursts unter Konstanthaltung des Verhältnisses von Sendefrequenz und Pulsfolgefrequenz. Entgegen bekannter Maßnahmen mit Umschaltung der Sendefrequenz oder der Pulsfolgefrequenz zur Erweiterung des Eindeutigkeitsbereichs der gemessenen Dopplergeschwindigkeit bleiben bei dieser Weiterbildung der Erfindung die Blindgechwindigkeiten unverändert. Für ein echtes Ziel kann davon ausgegangen werden, daß sich die Radialgeschwindigkeitskomponente während zweier Bursts nicht wesentlich ändert, so daß der amplitudenstärkste Filterreport bei der Dopplerfilterung des Echosignals eines solchen Ziels in zwei aufeinanderfolgenden Bursts im gleichen oder einem unmittelbar benachbarten Einzelfilter der Dopplerfilterbank auftritt. Die Störsignale eines zufälligen oder absichtlichen Störers sind hingegen i.a. nicht in dieser Weise korreliert, so daß ein Vergleich der Dopplerfilterreports von Zielmeldungen aus aufeinanderfolgenden Bursts, für die bereits Übereinstimmung der tatsächlichen oder scheinbaren Entfernungen festgestellt wurde, mit hoher Wahrscheinlichkeit zu einer richtigen Unterscheidung zwischen Falschzielen und echten Zielen führt.

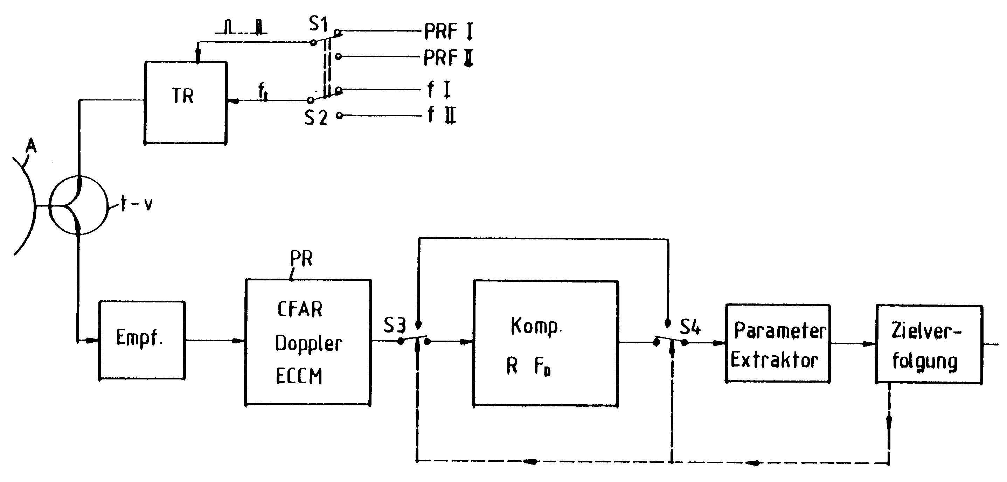

Die Erfindung ist nachfolgend anhand der Abbildung noch erläutert.

Die Radarantenne A ist über einen Sende-Empfangs-Umschalter t-r einerseits mit dem Sender TR und andererseits mit dem Empfänger verbunden. Der Sender wird aus einem Oszillator mit einer Trägerfrequenzschwingung $f_t$ angesteuert und durch mit einer Pulsfolgefrequenz PRF erzeugte kurze Pulse ausgesteuert. Im Empfänger werden die Echosignale in bekannter Weise verstärkt und demoduliert und als analoge oder digitale Signale an nachgeschaltete Auswerteeinrichtungen weitergeleitet. Diese umfassen in einem Prozessor PR in dem abgebildeten Fall beispielsweise eine CFAR-Schaltung, eine Doppler-Filterbank und ECCM-Einrichtungen (z.B. jam-Detektor, Nebenzipfelunterdrückung SLB). Am Ausgang des Empfängers ist die sich aus den empfangenen Signalen ergebende Datenrate sehr hoch. Mit den an sich bekannten Maßnahmen im Prozessor PR kann diese Datenrate durch Wegfall der Rauschsignale, der Festzielechos, der über Nebenzipfel empfangenen Signale usw. wesentlich reduziert werden.

Die am Ausgang des Prozessors abgegebenen Daten werden bei gebräuchlichen Radaranlagen in einem Parameterextraktor weiterverarbeitet und bestimmte Zieldaten, wie Zielentfernung und Radialgeschwindigkeit zur weiteren Verarbeitung, z.B. zur Zielverfolgung an einen Verfolgungsrechner ausgegeben. Durch gezielte Störung der Radaranlage durch gegnerische ECM-Maßnahmen kann aber die Datenrate am Ausgang des Prozessors PR und des Parameter-Extraktors so stark ansteigen, daß die Kapazität des Zielverfolgungsrechners nicht mehr zur Verarbeitung aller Zielmeldungen ausreicht, so daß z.B. für neu gemeldete Ziele keine Zielverfolgungsprozedur eingeleitet wird.

Zur weiteren deutlichen Reduzierung der Datenrate ist nach dem Prozessor PR daher ein Vergleicher Komp angeordnet, der die vom Prozessor abgegebenen Zielmeldungen von zwei oder mehr aufeinanderfolgenden Bursts vergleicht. Der Einfachheit halber ist im folgenden nur der Fall behandelt, daß der Vergleicher jeweils zwei aufeinanderfolgende Bursts zum Vergleich heranzieht. Das prinzipielle Vorgehen ist aber ohne weiteres auch auf einen Vergleich mehrerer aufeinanderfolgender Bursts anzuwenden.

Im Vergleicher werden neu vom Prozessor PR eintreffende Zielmeldungen mit aus dem vorangehenden Burst gespeicherten Zielmeldungen dahingehend verglichen, ob zu dem Entfernungsring, aus dem die neu eintreffende Zielmeldung stammt, oder einem unmittelbar benachbarten Entfernungsring aus dem vorangehenden Burst bereits eine Zielmeldung gespeichert ist. Zutreffendenfalls wird eine entsprechende Meldung durch Ausgabe der gespeicherten Daten und evtl. auch der neu eingetroffenen Daten zu dieser Entfernung an den Parameter-Extraktor abgegeben. Die neu vom Prozessor PR eingetroffenen Daten werden dann im Vergleicher gespeichert bis der Vergleich mit dem nächsten Zeil abgewickelt wird.

Ergibt sich bei dem Vergleich einer neu vom Prozessor eintreffenden Zielmeldung keine Entfernungsübereinstimmung mit irgendeiner aus dem vorausgegangenen Burst gespeicherten Zielmeldung, so wird keine Meldung an den Parameterextraktor abgegeben und nur die neue Zielmeldung im Vergleicher gespeichert. Nach Abarbeiten eines Bursts können alle im Vergleicher gespeicherten Zielmeldungen aus dem vorangegangenen Burst gelöscht werden.

Bei einer bevorzugten Weiterbildung der Erfindung werden zwischen zwei Bursts sowohl die Sendefrequenz als auch die Pulsfolgefrequenz umgeschaltet. In der Abbildung ist dies angedeutet durch die gemeinsam betätigbaren Umschalter S1 und S2, mittels derer der Sender TR wahlweise zur Aussendung von Sendepulsen der Trägerfrequenz $f_t = f_I$ mit einer Pulsfolgefrequenz PRFI oder Sendepulsen der Trägerfrequenz $f_t = f_{II}$ mit einer Pulsfolgefrequenz PRFII veranlaßt wird. Die verschiedenen Sendefrequenzen und Pulsfolgefrequenzen stehen dabei in dem quantitativen Zusammenhang $PRFI/f_I = PRFII/f_{II}$, so daß sich beidesmal dieselbe Blindgeschwindigkeit ergibt. Bei mehr als zwei verschiedenen Sendefrequenz-Pulsfolgefrequenz-Kombinationen gilt der gleiche quantitative Zusammenhang.

Im Vergleicher wird ergänzend zur Überprüfung auf Übereinstimmung der gemessenen Zielentfernung der Zielmeldungen aus zwei aufeinanderfolgenden Bursts für die neu eingetroffenen und entfernungsgleichen gespeicherten Zielmeldungen noch ein Vergleich der Nummern der Dopplerfilter mit den jeweils amplitudenstärksten Filterreports vorgenommen. Wenn (neben der Übereinstimmung der Entfernung) die amplitudenstärksten Filterreports der verglichenen Zielmeldungen aus demselben Einzelfilter oder zwei unmittelbar benachbarten Einzelfiltern der Dopplerfilterbank stammen, wird dies als Hinweis auf das Vorliegen einer Zielmeldung von einem echten Ziel gewertet und eine entsprechende Meldung an den nachfolgenden Parameter-Extraktor abgegeben. Es wird dabei vorteilhafter Gebrauch gemacht von der Erkenntnis, daß in der für zwei Bursts benötigten kurzen Zeit ein echtes Ziel weder die Entfernung zur Radaranlage noch die Radialgeschwindigkeit wesentlich ändert, so daß die entsprechende Zielmeldung in aufeinanderfolgenden Bursts im gleichen Dopplerfilter oder nicht mehr als ein Einzelfilter verschoben erscheint und die in dem Vergleicher vorgenommene Überprüfung echte Ziele mit hoher Wahrscheinlichkeit erkennt und weitergibt. Die Realisierung des erfindungsgemäßen Verfahrens erfordert nur einen geringen Aufwand für den Vergleicher und für die Speicherung und den Vergleichsvorgang nur sehr kurze Verarbeitungszeiten, so daß der Vergleicher ohne weiteres jede am Ausgang des Prozessors PR maximal zu erwartende Datenrate in Echtzeit bewältigen kann.

Da die erfindungsgemäßen Maßnahmen zur Reduzierung der Datenrate in erster Linie vorgesehen sind, um in nachfolgenden Verarbeitungsstufen mit geringer Kapazität eine Überlastung zu verhindern, sieht eine vorteilhafte Ausführungsform der Erfindung vor, den Vergleicher nur bei tatsächlich hoher Datenrate in den Signalweg zu schalten und bei geringer Datenrate den Vergleicher zu umgehen oder andere Funktionseinheiten an dessen Stelle zu setzen und nur bei Bedarf die Reduzierung der Datenrate in der beschriebenen Weise vorzunehmen. Hierzu wird die Datenrate vorzugsweise im Zielverfolgungsrechner (möglich aber auch Prozessor PR oder Parameterextraktor) gemessen und nach Maßgabe der gemessenen Datenrate der Signalweg mittels der Schalter S3 and S4 umgeschaltet. Bei Betriebsarten ohne den Vergleicher entfällt auch die Vorschrift für die umschaltbaren Sende-und Pulsfolgefrequenzen.

**Patentansprüche**

1. Verfahren zur Verringerung von Falschzielmeldungen in einem Pulsdopplerradar mit intervallweise kohärenter Verarbeitung der Echosignale, wobei
   - zwischen benachbarten Verarbeitungsintervallen die Pulsfolgefrequenz verändert wird,
   - in einem Prozessor (PR) zumindest die einer Zielmeldung zugeordneten Echosignale durch Dopplerfilterung in einer Filterbank mit einer Mehrzahl von Dopplerfiltern verarbeitet werden,
   - Zielmeldungen in aufeinanderfolgenden Verarbeitungsintervallen entfernungsringweise verglichen werden,
   - nur dann auf Vorliegen eines echten Ziels entschieden wird, wenn in mindestens zwei aufeinanderfolgenden Verarbeitungsintervallen ein Ziel in demselben Entfernungsring oder zwei unmittelbar benachbarten Entfernungsringen gemeldet wird, und
   - Zielmeldungen, bei denen diese Bedingung nicht erfüllt ist, unterdrückt werden, dadurch gekennzeichnet,
   - daß für die am Ausgang des Prozessors (PR) entstehende Datenrate ein Schwellwert festgelegt wird und
   - daß bei einer Datenrate, welche den Schwellwert überschreitet,
   - zwischen zwei aufeinanderfolgenden Verarbeitungsintervallen die Sendefrequenz und die Pulsfolgefrequenz derart umgeschaltet werden, daß die Blindgeschwindigkeit des Pulsdopplerradars unverändert bleibt, und

   - auf das Vorliegen eines echten Zieles geschlossen wird, wenn die zu aufeinanderfolgenden Verarbeitungsintervallen gehörenden amplitudenstärksten Filterreports entfernungsgleicher Zielmeldungen aus demselben Dopplerfilter oder zwei unmittelbar benachbarten Dopplerfiltern stammen.

**Claims**

1. Method for the reduction of false target reports in a pulsed Doppler radar with coherent processing of the echo signals at intervals, in which
   - the pulse repetition frequency is changed between successive processing intervals,
   - at least the echo signals associated with one target report are processed in a processor (PR) through double filtering in a filter bank with a plurality of Doppler filters,
   - target reports in successive processing intervals are compared by distance ring,
   - the presence of a genuine target is concluded only when a target in the same distance ring or in two directly adjacent distance rings is reported in at least two successive processing intervals and
   - target reports, for which this condition is not fulfilled, are not suppressed, characterised thereby,
   - that a threshold value is fixed for the data rate arising at the output of the processor (PR) and
   - that for a data rate, which exceeds the threshold value,
   - the transmission frequency and the pulse repetition frequency are switched over in such a manner between two successive processing intervals that the blind velocity of the pulsed Doppler radar remains unchanged and
   - that the presence of a genuine target is concluded when the filter reports of greatest amplitude, which belong to successive processing intervals, of equidistant target reports originate from the same Doppler filter or from two directly adjacent Doppler filters.

**Revendications**

1. Procédé de réduction des indications de cibles fausses dans un radar Doppler à impulsions avec traitement cohérent par intervalles des signaux d'écho, procédé dans lequel

- la fréquence de répétition d'impulsions est changée entre des intervalles de traitement adjacents,
- au moins les signaux d'écho coordonnés à une indication de cible sont traités, dans un processeur (PR), par filtrage Doppler dans un banc de filtres comportant une pluralité de filtres Doppler,
- des indications de cibles dans des intervalles de traitement successifs sont comparées anneau de distances par anneau de distances,
- il est seulement conclu à la présence d'une cible véritable en cas d'indication d'une cible dans le même anneau de distances ou dans deux anneaux de distances directements adjacents en au moins deux intervalles de traitement successifs et
- les indications de cibles pour lesquelles cette condition n'est pas remplie, sont supprimées, caractérisé en ce que
- un seuil est fixé pour le débit d'informations obtenu à la sortie du processeur (PR) et
- pour un débit d'informations dépassant le seuil,
- la fréquence d'émission et la fréquence de répétition d'impulsions sont commutées entre deux intervalles de traitement successifs, de manière que la vitesse aveugle du radar Doppler à impulsions reste inchangée et
- il est conclu à la présence d'une cible véritable lorsque les reports de filtres d'amplitude maximale, appartenant à des intervalles de traitement successifs et à des indications de cibles de même distance, proviennent du même filtre Doppler ou de deux filtres Doppler directement adjacents.

EP 0 260 670 B1

S1

PRF I

PRF II

f I

S2 — f II

TR

fₜ

A

t - v

PR

Empf.

CFAR
Doppler
ECCM

S3

Komp.
R  F_D

S4

Parameter
Extraktor

Zielverfolgung